# EUROPEAN PATENT SPECIFICATION

(11) **EP 1 700 354 B1**
(45) Date of publication and mention of the grant of the patent: **12.10.2011**
(21) Application number: 04816050.1
(22) Date of filing: 21.12.2004
(51) Int. Cl.: H01M 2/02, H01M 2/06, H01M 2/30, H01M 10/06

(54) **BATTERY PART**
BATTERIETEIL
PIECE DE BATTERIE

(30) Priority: 02.01.2004 US 533924 P; 18.03.2004 US 804401; 13.12.2004 US 11362
(43) Date of publication of application: 13.09.2006
(60) Divisional application: 10196207.4
(73) Proprietor: WATER GREMLIN COMPANY, White Bear Lake, MN 55110 (US)
(72) Inventor: RATTE, Robert, W., North Oaks, MN 55127 (US); PETERSON, Norman, E., Wyoming, MN 55092 (US)
(74) Representative: Modiano, Micaela Nadia
(86) International application number: PCT/US2004/044071
(87) International publication number: WO 2005/067513

(56) References cited:
- EP-A1- 0 601 268
- DE-A1- 2 645 977
- DE-B4- 4 127 956
- DE-C1- 3 230 628
- GB-A- 297 904
- GB-A- 1 352 882
- JP-A- 56 159 054
- US-A- 4 062 613
- US-A- 4 168 618
- US-A- 4 775 604
- US-A1- 2003 224 248

## Description

### FIELD OF THE INVENTION

This invention relates generally to battery parts and, more specifically, to a battery part and a method of flaring an acid ring to form an enhanced sealing region with minimized opportunities for stress cracks in the battery part.

### CROSS REFERENCE TO RELATED APPLICATIONS

This application claims priority from provisional application Serial Number 60/533,924 filed January 2, 2004 titled Battery Part and Method of Making and is a continuation-in-part of U.S. patent application 10/804,401 filed March 18, 2004 titled Battery Part.

### STATEMENT REGARDING FEDERALLY SPONSORED RESEARCH OR DEVELOPMENT

None

### REFERENCETO A MICROFICHE APPENDIX

None

### BACKGROUND OF THE INVENTION

Battery parts such as battery terminals, which are typically cold formed or die cast, are normally secured to a container with a portion of the battery terminal located inside the container and a further portion located outside the container. The battery containers, which are typically plastic such as polyethylene, are molded around a set of acid rings that are located on the portion of the terminal that is located within the container. The acid rings provide an extended interface and consequently a tortuous path to inhibit or prevent electrolyte from escaping from the battery container. Because the acid must follow an extended interface to escape this type of sealing, with a set of concentric acid rings, is often referred to as a labyrinth seal.

Because the battery terminals are cast or cold formed the radially protruding acid rings are generally formed with either a rectangular cross sectional shape or a slight outward taper to facilitate removal of the battery terminals from the mold.

While battery terminals have a generally rectangular cross sectional shape are used extensively other shaped acid rings have been used in order to prevent the plastic container from shrinking away from the terminal and upsetting the interface between the battery part and the container which could cause leakage of electrolyte. Generally, these type of acid rings provide lateral engagement between the acid ring and the container.

For example, the 1971 United Kingdom patent specification GB 1236495 discloses a battery terminal wherein two acid ring are bent toward each other to provide a dovetail shaped gap that extends along the entire length of the acid ring so that it enables the two adjacent acid rings to form a dovetail joint with the battery container and thereby provide lateral engagement between the acid ring and the container.

The 1971 United Kingdom patent specification GB 1,245,255 discloses three acid rings that have been deformed to create a dovetail shaped gap between adjacent acid rings with the dovetail gap extending along the entire length of the acid ring to form two dove tail joints with the container and thereby provide lateral engagement between the acid ring and the container. In this embodiment the acid rings are compressed sufficiently to deform the acid rings so that the acid ring tapers inwardly along the entire length of the ring, that is from the circumferential edge of the acid ring to the base of the acid ring.

The 1981 Japanese patent JP56159054 discloses a further embodiment wherein the battery terminal acid rings are deformed along the entire length of the acid ring to form inclined projections on the acid rings that engages the cover to provide effective liquid tightness and thereby provide lateral engagement between the acid ring and the container.

The 1993 Hofmann German patent DE 4127956 A1 discloses a battery terminal wherein the ends of the acid rings have been rounded and the lower acid ring has been provided with a wedge shaped profile to increase the sealing effect with a container and thereby provide lateral engagement between the acid ring and the container.

The 1994 Hofmann German patent DE 4241393 C1 discloses a battery terminal wherein the ends of the acid rings have been rounded and a barb or undercut that forms a hook which is located on the back side of the acid ring. The "hook" on the back side of the deformed acid ring hooks into the plastic container i.e. to lateral restrain the container to prevent the plastic battery container material from shrinking away from the battery terminal. In addition, a further embodiment is disclosed wherein adjacent acid rings are of the same thickness but are angled away from each other in order to laterally restrain the container with respect to the acid rings.

The 1992 Hofmann European patent 0 601 268 B1 discloses a battery terminal wherein the ends of the acid rings either have a rounded end or a triangular shaped end with a barb or hook on the back side of the acid ring. This "hook" on the back side of the deformed acid ring hooks the plastic to prevent the plastic battery container material from shrinking away from the battery terminal by laterally restraining the container with respect to the acid rings.

The 1992 Hofmann European patent application 0 601 268 A1 also discloses the battery terminal wherein the ends of the acid rings either have a rounded end or a triangular shaped end with a barb or undercut or hook on the back sides of the acid ring. In addition, a further embodiment of an acid ring is disclosed wherein two adjacent acid rings, which are of the same thickness, are angled away from each other to laterally restraining the container with respect to the acid rings by forming a dovetail like joint.

The 1989 Hofmann German patent application DE 3942175A1 discloses a method of forming a battery terminal with acid rings by cold rolling the terminal to form the circumferential acid rings.

U.S. Speigelberg patent 6,644,084 describes a process of forming an acid ring with a hook by first deforming the battery terminal from a rectangular shaped acid ring to an arrowhead shaped acid ring. The transformation to the hook shape is obtained by rotating the battery terminal relative to a cold forming roller to deform an acid ring with a rectangular cross section into an acid ring having an undercut or overhang. The cold rolling process involves substantial deformation of the acid ring on the cast battery part in order to produce the hook for engaging the battery container.

GB 297904A discloses a metal lid for a storage battery which has insulating bushes for the electrode lugs- The lid is casted around the bushes in a mould to secure the bushes therein. To create tight joints with the lugs rubber washer arc inserted in the bushes. US-A-4062613 discloses a battery terminal connecting element which has a threaded socket for connecting to another element having a corresponding threaded hole. The socket has projections on its internal face which are arranged in a helix structure. US-A-4775604 discloses a seal assembly for a battery, which has an opening in the cover for receiving the terminal post. An integral sleeve, which tapers downwardly toward the terminal post defines a space thercaround which receives a compressible elastomer bushing inserted around the terminal post and into the space. The bushing has one surface corresponding to the surface on the sleeve and another oppositely angled surface which is enraged by the lower surface of an annular retainer inserted around the terminal and over the bushing. By inserting the retainer into the sleeve and against the bushing radial compression of the bushing against the terminal post and the tapered surfaces of the sleeve and retainer a scaling is achieved. DE2645977A1 discloses a battery terminal for a car battery, which is a cap mounted on the poles of a battery. The cap has sealing lips which, when the cap is pressed on the terminal, are closing the terminal from the outer environment. DE3230628C1 discloses a method for creating a gas- and fluid tight terminal seal for an accumulator with respect to the passage of a rubber cover. The terminal surface is coated with an adhesive and then subsequently covered with rubber. The rubber is attached to the terminal by a vulcanization process. GB-A-1352882 discloses a battery terminal seal including a lid which is molded to the plastic casing. The terminal has a groove, which receives a sealing ring which extends beyond the groove for preventing that a leakage occurs when the lid shrinks. US2003224248A1 discloses a method and an apparatus for cold forming a battery terminal. The battery terminal has an insert with one part encapsulated in the base and another part, which extends beyond the base. The method is for manufacturing a cold-formed battery terminal, which includes cold forming a lead slug into a member having a base and a first aperture extending therein.

While the prior art provides acid rings with rectangular shapes that are either bent or transformed into a different shape by cold rolling to form a lateral restraint between the battery container and the terminal. The lateral restraint is obtained by either forming a hook on the acid ring or forming a dovetail or dovetail like engagement between the battery container and the battery terminal.

In contrast to the prior art acid rings, where the shape of the acid ring is substantially altered, in the present invention one can cast a battery part with the acid ring having a bifurcated end separated by a circumferential grove or an end with a single annular tapered lip. The bifurcated end results in two outwardly extending annular lips on each acid ring. The annular lips on each acid ring can he flared away from each other to produce a beveled surface or sealing bead along an annular outer portion of each of the annular lips which not only laterally restrains the container with respect to the terminal but also forms an enhanced sealing region between the container and the acid ring. In addition the circuitous path provided by the bifurcated acid rings can increase the resistance to electrolyte leakage by providing a more tortuous interface between the acid rings and the container.

A further feature of the invention is the flaring of the lips can be obtained by applying a radial compressive force to the bifurcated ends of the acid ring. Since only the bifurcated ends of the acid ring are flared it substantially eliminates problems that can occur with prior art cold forming deformation of a pressure cast battery terminal. That is, an interface between a die cast portion of battery terminal and a cold rolled portion of the battery terminal can lead to cracks or stress areas between the cast region and the cold formed region of the battery part, which can be subject to electrolyte leakage therethrough. By minimizing the interface one can minimize the opportunity for leakage.

Thus the flaring of the lips on the bifurcated acid ring of the present invention produces a back flare sealing region that extends circumferential around the terminal which not only enhances sealing but also restrains lateral engagement between the container and the acid rings and at the same time minimizing the occurrences of fractures or stress cracks in metal that has a portion of the original die cast shape altered by cold rolled deformation.

The present invention provides a battery part that eliminates the substantial deformation or acid ring transformation necessary to either form an under cut or overhang on the acid ring or to deform an acid ring along its entire length to form a dovetail engagement as shown in GB 1236495; GB 1,245,255; JP 5619054 and EPO 06012681A1. In addition, the present invention further eliminates the need to mechanically deform the acid ring from a rectangular shape to an arrow head shaped acid ring or to an acid ring with a hook or an acid ring with a beveled surface that extends along the entire length of the acid ring as shown in EPO06012681B1 and DE 4241393.

Thus, by flaring the lip or lips on the circumferential end of the acid ring one can form annular sealing regions, laterally restrain the container with respect to the acid ring, and inhibit electrolyte from escaping from the battery container with a more tortuous path. Not only does the present invention inhibit escape of electrolyte by providing a circumferential sealing ring it also make it easier to flow the plastic around the acid ring since the flared lip extends along only a portion of the acid ring. In addition, the present process minimizes stress produced in the battery part when a substantial part of a die cast battery terminal is subsequently transformed to a substantially different shape by cold rolling since the lips on the end of the acid ring can be flared instead of mechanically deformed into an entirely different shape.

### SUMMARY OF THE INVENTION

The invention relates to a battery terminal and a method of forming such a battery part as claimed in claim 1 and 11.

Briefly, the invention comprises a battery part such as a battery terminal with the battery part having an inclined sealing region or sealing bead located on a lateral face of the acid ring with the sealing region increasing the resistance to leakage therepast as the container shrinks. Another embodiment of the invention comprises a battery part with a bifurcated acid ring end and a beveled end face. The invention further includes the method of forming a battery terminal with an end face of the acid ring having a bifurcated end and a beveled face that permits one to use the battery terminal in an as is condition or in a flared condition wherein the lips on the bifurcated end of the acid ring can be flared to form a beveled scaling region that functions like an "O-ring" on the backside of the lip of the acid ring.

### BRIEF DESCRIPTION OF THE DRAWINGS

Figure 1 is a partial cross sectional view of a battery terminal with bifurcated acid rings;
Figure 2 is a partial cross sectional view of a chamber having a fluidized particles that impinge on a battery part therein;
Figure 3 is a partial cross sectional view of the battery terminal of Figure 1 after being exposed to the fluidized media or particles as illustrated in Figure 2;
Figure 4 is a partial side view showing radial peening members for folding over the ends of the bifurcated acid rings on a battery terminal;
Figure 5 is a top view of three radial peening members located around the periphery of a the a battery terminal with bifurcated acid rings;
Figure 6 is a partial side view of a battery terminal having a set of acid rings with a valley or groove in the end face of the acid rings;
Figure 7 is a top view of the battery terminal of Figure 8 in a collet;
Figure 7A is a sectional side view showing the beveled surfaces and the lateral surface on an acid ring with bifurcated lips;
Figure 7B is an enlarged view of a portion of the acid rings to reveal the beveled sealing surfaces on the acid ring; and
Figure 8 is a partial side view of the battery terminal of Figure 6 in a collet in an expanded condition;
Figure 9 is a partial side of the battery terminal and collet when the collet is partially contracted;
Figure 10 is a partial side view of the battery terminal of Figure 6 when the collet is in a contracted condition;
Figure 11 is a partial side view of the battery terminal of Figure 6 with the acid rings having been deformed by the collet;
Figure 12, which is no part of the present invention, is side view wherein the acid ring is formed with a single lip on each acid ring;
Figure 13 shows a tapered collet for deformed the battery terminal;
Figure 14 shows a partial cross section view of a set of acid rings that have been deformed by the collet of Figure 13.

### DESCRIPTION OF THE PREFERRED EMBODIMENT

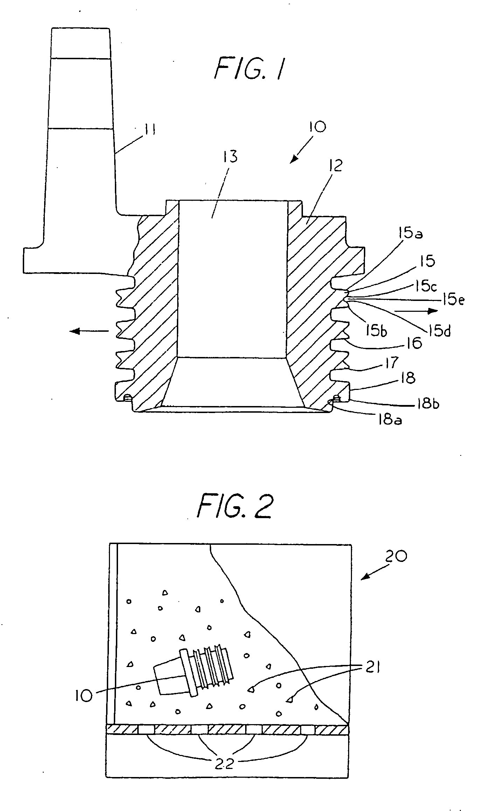

Figure 1 shows a battery part 10 comprising a battery terminal having an upward extending lug 11 and a hollow base 12 having a central opening 13 therein. Located around the exterior of battery terminal 10 is a set of bifurcated annular acid rings 15, 16, 17, and 18 that have been formed by a die casting process. That is, a segmented mold (not shown) which radially surrounds the sides of battery part 10 during the casting process has been pulled radially away from the battery part 10 to release the battery part from the mold. Due to the configuration of the battery part and the need to pull the side mold parts radially or laterally away from the terminal the intermediate acid rings 15, 16 and 17 are oftentimes each provided with a slight tapered. Each of the acid rings 15, 16 and 17 have been cast with an annular V shaped groove located in the end of each of the acid rings. The placement of the groove in the end of acid ring generates a bifurcated circumferential end to the acid ring with each of the bifurcated ends including radially extending annular lips which are located along the opposite lateral faces of the acid rings 15, 16 and 17. Thus, a feature of the present invention is a battery terminal wherein the cast battery terminals comprising a bifurcated acid ring 15 with a die cast upper annular lip 15a and a die cast lower annular lip 15b. The end face of each of the acid rings are shown with an interior side surface or a bevel face 15c and interior side surface or a bevel face 15b that are joined at the root of the acid ring to form a V shaped annular groove 15e. Similarly, each of the bifurcated acid rings 16 and 17 have identical lips that form an apex at the root of the lips and a V shaped annular groove on the periphery of the annular acid ring.

In the embodiment shown in Figure 1 the lower acid ring 18 is provide with an undercut 18a which can be formed by an end mold (not shown) that coacts with the side molds. That is, the end mold can be used to form the annular downward extending lip 18b since the end mold can be moved axially away from the end of the mold when the battery part is released from the mold.

Thus a feature of the present invention is the ability to cast a battery terminal wherein after the casting process has been completed at least one of the acid rings contains a lip or overhang 18b that can be used to seal the battery terminal to a battery container. Although an overhang 18 can be cast with the present process of forming bifurcated acid rings one may elect not to cast a terminal with an overhang and instead use only the flared bifurcated ends of the acid rings to maintain the sealing relationship between the container and the terminal.

Figure 2 illustrates the battery terminal 10 located in a fluidized bed having particles 21 that impinge on the exterior surfaces or beveled end face of the acid rings 15, 16 and 17 of the battery terminal through the introduction of fluid through lower openings 22. The impingement of the particles, which are preferably harder than the battery part, provide a two-fold effect. The first effect is that the particles impinging the battery part can polish the exterior surface of the battery part. The second effect is that it has been found that the impingement of particles on the beveled end surfaces of the acid ring can causes the lips of annular acid rings to fold over or flare out and create a beveled sealing region or sealing bead much like an O-ring on the lateral face of the acid rings. Thus, a feature of the present invention is that one eliminates the need to form a "hook like" connection between the battery terminal and the battery container or to deform the entire acid ring into a dovetail.

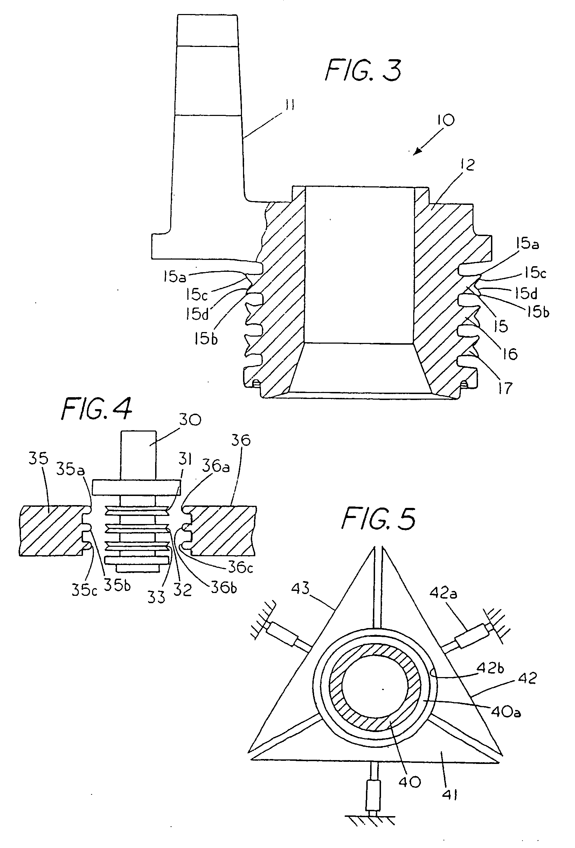

A reference to Figure 3 shows how battery part 10 appears after being subjected to impingement from fluidized particles. To illustrate the folding or flaring of the annular lip reference should be made to acid ring 15 which shows lip 15a curved upward and lip 15b curved downward. That is, the impingement of particles on the bevel surface 15c and 15d occurs with sufficient force so that the annular lips 15a and 15b are flared outward to thereby creating a sealing region on the backside thereof for sealing engaging and restraining a battery container without the need for forming a hook on the battery part. Since the angled surfaces 15c and 15d transmit a portion of the force in an axial direction the lip can be flared or folded outward through the radial impingement of particles on the angled surfaces 15c and 15d. As each of the bifurcated annular rings 16 and 17 have identical annular lips each of the bifurcated annular rings 16 and 17 produce a sealing region on the lateral face of the acid sealing rings for sealing engagement between container and terminal while laterally restraining a battery container with respect to the terminals without the use of a hook which could trap air therein during the formation of the container and consequently produce regions with enhanced risk of electrolyte leakage. However, if the lips are flared outward slightly to produce a sealing bead the trapped air can flow smoothly outward during the molding process and one need not be concerned with air being trapped in a "hook" on the backside of the acid ring.

While the battery part has been placed in a fluidized bed so that particles can be directed against the beveled side surface of the acid rings other methods of impinging particles against the surface such as in a tumbler where the battery part and harder media are allowed to contact the battery part as the media and the battery part are tumbled about can be used to deform the annular lips on the cast battery part. That is, in another flaring process the use of a deformable material such as a lead or lead alloy allows one can flare or bend the lips on the acid rings to the desired shape through contact of an article or particles with the angled side surfaces on the axially spaced circumferential acid rings.

Figure 4 shows a side elevation view of a different system and method for folding or flaring the annular lips into a container engaging protrusion or sealing region on the terminal. In the embodiment shown the battery terminal 30 contains annular acid rings 31 with a V-shaped groove in the end face. A set of radially displaceable peening or flaring members 35 and 36 are positioned proximate the acid rings. In the embodiment shown the peening member 35 includes curved protrusions 35a, 35b and 35c which are located in the same plane as acid rings 31, 32 and 32. Similarly, peening member 36 includes peening protrusions 36a, 36b and 36c that are located in the same plane as acid rings 31, 32 and 33. The radial inward displacement of member 35 and 36 brings the peening protrusions into engagement with the V-shaped grooves in each of the acid rings which causes the annular lips of the acid rings to be folded outward or flared outward as illustrated in Figure 3 to thereby form a sealing region or a rigid sealing ring on the backside of the acid ring.

Figure 5 shows a bottom view of how a multiple part radial peening member can peen or compress the bifurcated acid rings so each of the acid rings have a lip or protrusion for engaging a container. In the embodiment shown, a first arcuate shaped peening member 42 which is radially postionable through a hydraulic cylinder 42a includes a peening surface 42b that is an alignment with the acid ring 40a. Similarly, positioned around terminal 40 are peening members 41 and 43 that cooperate to form a closed annular peening member that engages and folds or flares the lips on the annular acid ring backward into the hooking or container engaging protrusion illustrated in Figure 3 by radial inward displacement of the peening members into the angled side surfaces of the annular lips on the acid ring. Thus Figure 5 illustrates one method of forming sealing regions on the bifurcated acid rings by directing a member into the V-shaped grooves in the end faces of the bifurcated acid rings.

While the invention has been described in regard to die casting the battery terminal could also be formed from other casting methods or through cold forming.

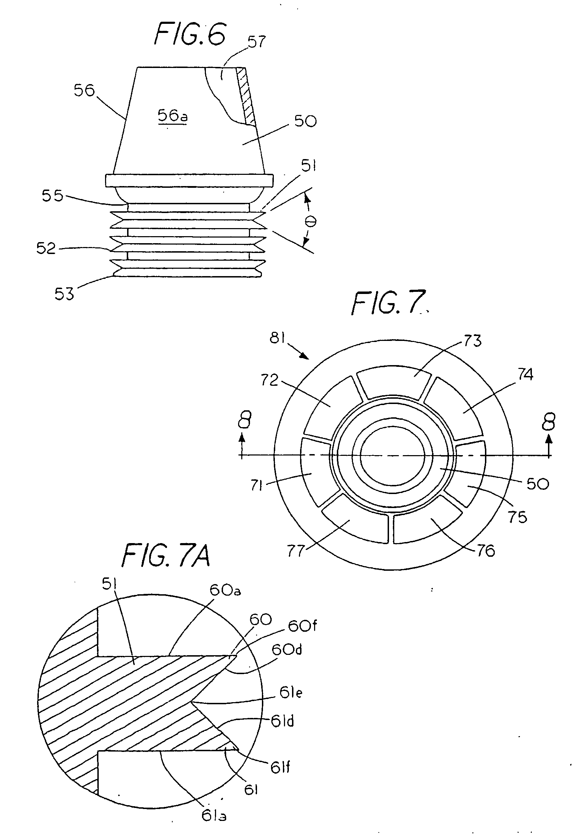

Figure 6 shows a preferred embodiment of the invention comprising a battery part 50 such as a battery terminal with a set of spaced bifurcated acid rings 51, 52 and 53. The bifurcated acid rings extend around the peripheral region of the battery part and can have any number of shapes including circular, hexagonal or the like. Although one acid ring can be sufficient for engagement with a battery container the battery part 50 generally includes at least three lateral spaced acid rings that extend radially outward from the base 55 of battery part 50.

Battery part 50 includes a connector lug 56 having an exterior surface 56a for forming an electrical connection to an external device. In the embodiment shown the battery terminal 50 includes a hollow central opening 57 to permit one to pour molten metal therein to form an electrical connection to an internal battery components such as a battery plate or the like.

Figure 7A shows an isolated view of a portion of bifurcated acid ring 51 to reveal in detail the lip 60 with a first face or lateral face 60a on one side and a second face, namely a beveled end face 60d on the other side of lip 60 with the lateral face 60a and the beveled end face 60d forming an included angle of less than 90 degrees therebetween. Similarly, a second lip 61 includes a first face or lateral face 61a on one side and a second face, namely, a beveled end face 61d on the opposite side with the lateral face 61a and the beveled end face 61d forming an included angle of less than 90 degrees therebetween. In addition, the beveled end face 60d intersects beveled end face 61d at an apex 61e to form a valley or V-shaped groove between the lip 60 on one face of the acid ring and the lip 61 on the opposite face of the acid ring 51.

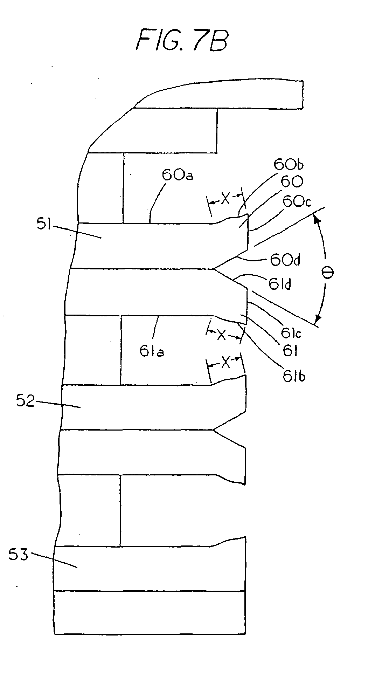

Figure 7B shows acid rings 51, 52 and 52 in a partial view in Figure 7A with the lips in a flared condition to form a lateral sealing region or sealing bead on the lateral faces of the acid rings to thereby enhance the sealing of a battery container to the terminal. The beveled surface 60d of the first lip 60 and the beveled surface 61d of second lip 61 are located at approximately a ninety degree angle to each other although the angle can vary depending on the selection of the angle of the beveled surface for each lip. In the embodiments shown the lips 60 and 61 which were previously in an unflared condition (Figure 7A) and an apex 60f and 61 have been transformed to a flared condition. The lip 60 has a an extended flat surface 60c and lip 61 has an extended flat surface 61c.

While Figure 7A illustrates the acid ring in the unflared condition, Figure 7B shows the acid rings in a flared condition. In the flared condition the lips on the bifurcated acid rings have been flared laterally to form a sealing region or sealing bead along the lateral faces of the acid rings.

Figure 7A shows acid ring 51 in the as cast condition revealing lip 60 and lip 61 in an a straight or unflared condition. In the embodiments shown bifurcated acid ring 51 has a first lateral face 60a and a second lateral face 61 located in a substantially parallel relation ship to each other.

Figure 7B shows bifurcated acid ring 51 in the flared condition. In the flared condition the bifurcated acid ring 51 includes a first circumferential end face 60c and a second circumferential end face 61c separated by a first circumferential beveled end face 60d and a second circumferential beveled end face 61d. In the flared condition a first circumferential sealing region or sealing bead 60b extends around the outer portion of lateral face 60a and a second circumferential sealing region or sealing bead 61 b extends around the outer portion of lateral surface 61a. As can be seen in Figure 7B the lip 60c located on the acid ring 51 and the lip 61 located on acid ring 51 have been flared upward to form the respective sealing regions 60b and 61b. The sealing regions have a lateral length denoted by x and extend partially along the lateral faces of the acid ring. Each of the sealing regions extend circumferentially around the battery terminal to provide a 360 degree sealing barrier between the container and the battery container.

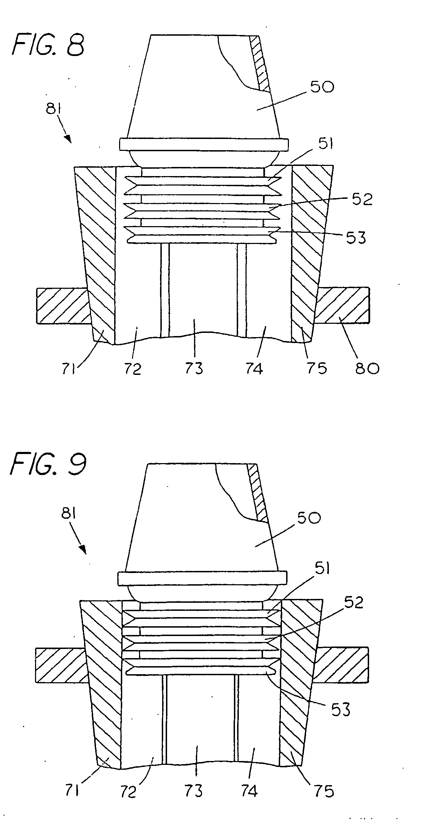

In order to appreciate the transformation of the battery terminal with a bifurcated acid ring into a battery terminal with cantilevered sealing regions reference should be made to Figure 7 and 8 which shows a collet 81 in top view. Figure 8 shows a section view the battery terminal 50 positioned between a set of cantilever mounted splines 71, 72, 73, 74 and 75 on the collet 81. Figures 7-10 illustrate a battery terminal placed in collet 81 and the collet collapsed to radially compress the lips on the acid ring to form a sealing bead on the lateral surface of the bead.

Figure 7 shows a top view of the battery terminal 50 centrally positioned between the splines 71-77 that are cantilevered held in a base member (not shown). A compression collar 80 extends around each of the splines so that when the collar is forced upward the splines are brought radially inward to flare the lips on acid rings 51, 52 and 53.

Figure 8 shows a section view of collet 81 surrounding battery terminal 50 with the splines 71, 72, 73 and 74 in a spaced condition about the bifurcated acid rings 51, 52 and 53. If desired a mandrel (not shown) can be inserted into battery terminal 50 to hold the battery terminal in postion.

Figure 9 shows the initial step in the formation of the sealing regions on the bifurcated acid rings 51, 52 and 53. In this condition the splines 71-75 have been brought into contact with the lips on the bifurcated acid rings 51, 52 and 53 while the acid rings are free to self center in the collet.

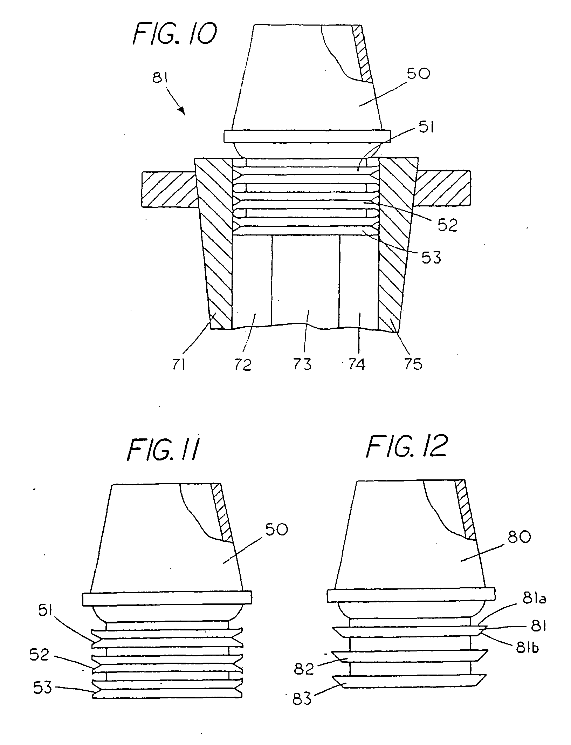

Figure 10 shows the compression step wherein the splines 71-75 have been squeezed radially inward to flare the lips on acid rings 51, 52 and 53 sufficient to form a sealing bead on the lateral surface of each of the lips on the acid rings but insufficient to form the lips into a hook. That is the deformation, which is shown in greater detail in Figure 7B, produces an inclined sealing region or sealing bead that extends along a portion of the backside of the flared lip of the acid ring. In the embodiment shown the radius of curvature of the collet and the radius of curvature of the acid rings are substantially equal so as to produce a uniform flaring of the lip.

Figure 11 shows terminal 50 after compression by collet 81. As can be seen in Figure 11 each of the lips on the acid rings 51, 52 and 53 have been flared to create the sealing regions illustrated in Figure 7B. In contrast to the deformation of the rectangular shaped acid rings as shown in the prior art the compression of the bifurcated acid ring involves only a slight deflecting of the lips to create the sealing bead thus minimizing the stress lines that can be caused by the junction between a cold forming portion on a die cast battery terminal.

Figure 12, which is no part of the present invention, is side view a battery part 80 wherein the acid rings 81, 82 and 83 are formed with a single lip on each acid ring. That is acid ring 81 has a lateral surface 81a and a beveled surface 81b that form an angle of less than 90 degrees and preferably 45 degrees of less so as form a lip that can be flared upward sufficiently to form a sealing bead on the lateral surface 81. In this embodiment the radial compression with the collet will form a top beveled sealing region on each lip to laterally restrain the container and simultaneously form an effective seal that inhibits the less of electrolyte therepast.

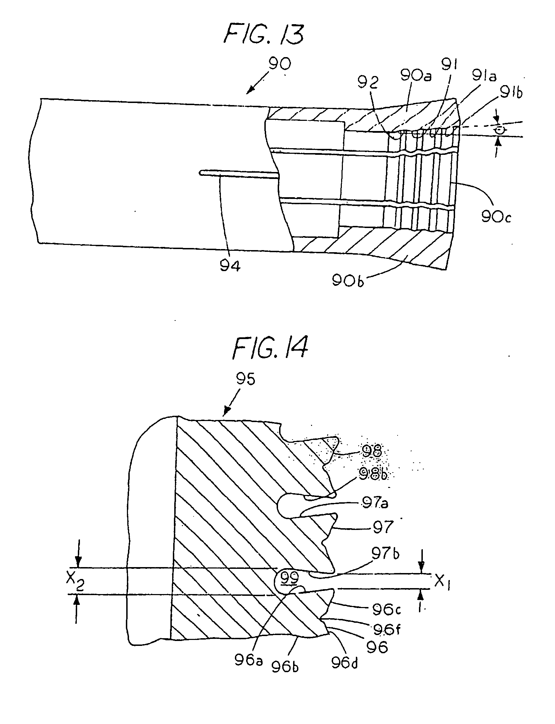

Figure 13 shows a collet 90 having a base with cantilevered sections 90b, 90a and 90c. Located on an inside face of the cantilevered collet sections are a set of annular ridges 91, 91a and 91 b.. An annular ridge 91 is adjacent a recess 92 as are the other ridges 91a and 91 b also proximate a recess. In the embodiment shown the collet makes an angle 0 with a line parallel to a central axis of the collet. The purpose of the angle in the collet face is to allow one to form acid rings on a battery terminal having a tapered base. The spacing of each of the ridges on collet 90 are such that the ridges align with the V shaped recess in the bifurcated acid ring as illustrated in Figure 4.

Figure 14 shows a partial sectional view of a battery terminal 95 wherein the collet 90 of Figure 13 has been used to compress the bifurcated acid rings 96, 97 and 98. Each of the bifurcated acid rings have been radially compressed to deform the acid rings so as to produce a tear drop shaped recess 99 between adjacent acid rings wherein the lower part of the recess has a width x₂ that is larger than the entry region width x₁ to the recess to thereby form a retaining pocket to received the molten material used to form the container around the battery terminal. As shown in Figure 14 the bifurcated acid ring 96 has an upper curved face 96c and a lower curved face 96d on opposite side of the undeformed portion 96f of the bifurcated acid ring 96 as a result of the acid ring having been deformed radially inward by collet 90. When each of the acid rings are subject to a squeezing by collet 90 the compression results in a smoothly curved surface 96a on the top side of acid ring 96 and a smoothly curved surface 97b on the bottom side of acid ring 97 that coact to form a tear drop shaped recess 99 for locking a battery container thereto. Similarly, the acid ring 98 has been deformed and the lower curved surface 97b coacts with upper curved surface 96a to form a further tear drop shaped pocket therebetween that can trap the molten plastic therein and assist in forming a leakproof seal. As can be seen in Figure 14 each of the acid rings converges from an exterior portion of the acid ring to an internal portion of the acid ring. For example, surface 96c and 96b of acid ring 96 smoothly curve from the outer most portion or entry region to the recess to the inner most point or the bottom of the recess.

While the invention has been shown with circular battery terminals the invention can also be used with battery terminals that are other than circular such as oblong. In those instance a multiple part die as opposed to a collet can be used to deform the bifurcated acid rings into a condition where a retaining pocket is formed between.

## Claims

1. A die cast battery terminal (10, 30, 50) comprising:
a connecting lug (11, 56);
a base (12, 55) comprising:
a bifurcated acid ring (15,16,17, 18, 31, 32, 35, 51, 52, 53);
a central axis extending through said base (12, 55);
said bifurcated acid ring (15, 16, 17, 18, 31, 32, 35, 51, 52, 53) having a first lip (15a, 60) and a second lip (15b, 61), said first lip (15a, 60) and said second lip (15b, 61) each having:
a lateral face (60a, 61a) extending from the base (12, 55) to a beveled side surfaces (60d, 61d) extending toward the base (12, 55), the lateral face (60a, 61a) having a generally planar portion, and the beveled side surface (60d) of the first lip (15a, 60) converging toward the beveled side surface (61d) of the second lip (15b, 61) to form a groove (15e) therebetween;
said base being **characterized in that** it comprises a plurality of said bifurcated acid rings (15, 16, 17,18, 31, 32, 35, 51, 52, 53), each of said bifurcated acid rings (15, 16, 17,18, 31, 32, 35, 51, 52, 53) comprising a sealing bead (60b, 61b) on the lateral face (60a, 61a) of each of said lips (15a, 60, 15b, 61).

2. The die cast battery terminal (10, 30, 50) of claim 1 wherein the beveled side surface (60d) of the first lip (15a, 60) and the beveled side surface (61d) of the second lip (15b, 61) form a V-shaped groove therebetween.

3. The die cast battery terminal (10, 30, 50) of claim 1 wherein the first lip (15a, 60) and the second lip (15b, 61) comprise annular lips that extend around the periphery of the acid rings (15, 16, 17, 18, 31, 32, 35, 51, 52, 53).

4. The die cast battery terminal (10, 30, 50) of claim 1 wherein at least one of the acid rings (15, 16, 17, 18, 31, 32, 35, 51, 52, 53) includes an undercut (18a) therein to provide a protrusion for engaging a container.

5. The die cast battery terminal (10, 30, 50) of claim 2 wherein the beveled side surface (60d) of the first lip (15a, 60) and the beveled side surface (61d) of second lip (15b, 61) are located at approximately a ninety degree angle relative to each other.

6. The die cast battery terminal (10, 30, 50) of claim 1 wherein the lateral face (60a, 61a) and the beveled side surface (60d, 61d) of each of the first and second lips (15a, 60, 15b, 61) form an acute angle with reference to each other.

7. The die cast battery terminal (10, 30, 50) of claim 1 wherein the lateral face (60a, 61a) of the first lip (15a, 60) is generally parallel to the lateral face (60a, 61a) of the second lip (15b, 61).

8. The die cast battery terminal (10, 30, 50) of claim 1 wherein the sealing bead (60b, 61b) of each of lateral faces (60a, 61a) extends circumferentially around the base portion (12, 55).

9. The die cast battery terminal (10, 30, 50) of claim 1 wherein the sealing bead (60b, 61b) of each of the lateral faces (60a, 61a) comprises a circumferential sealing bead (60b, 61b) extending around an outer portion of the lateral face (60a, 61a) adjacent to the corresponding beveled side surface (60d, 61d),

10. The die cast battery terminal (10, 30, 50) of claim 1 wherein the first lip (15a, 60) is flared away from the second lip (15b, 61).

11. A method of forming a battery part (10, 30, 50), the method comprising:
casting a battery part (10, 30, 50) having a lug portion (11, 56) extending from a base portion (12, 55), wherein casting the battery part (10, 30, 50)comprises:
casting the base portion (12, 55) having a plurality of bifurcated acid rings (15, 16, 17, 18, 31, 32, 5, 51, 52, 53), individual acid rings (15, 16, 17,18, 31, 32, 35, 5.1, 52, 53) having a first lip (15a, 60) and a second lip (15b, 61), each of the first and second lips (15a, 60, 15b, 61) having:
a lateral surface (60a, 61a) extending away from the base portion (12, 55);
a beveled side surface (60d, 61d) extending from the lateral surface (60a, 61a) toward the base portion (12, 55), wherein the beveled side surface (60d) of the first lip (15a. 60) converges toward the beveled side surface (61d) of the second lip (15b, 61) to form a groove therebetween.

12. The method of claim 11, further comprising at least partially flaring the first lip (15a, 60) away from the second lip (15b, 61).

13. The method of claim 12 wherein at least partially flaring the first lip (15a, 60) away from the second lip (15b, 61) comprises forming a sealing bead (60b, 61b) on the lateral surface (60a, 61a) of each of the first and second lips (15a, 60, 15b, 61).

14. The method of claim 12 wherein at least partially flaring the first lip (15a, 60) away from the second lip (15b, 61) comprises impinging the beveled side surface of each of the first and second lips (15a, 60, 15b, 61) with a plurality of particles.

15. The method of claim 12 wherein at least partially flaring the first lip (15a, 60) away from the second lip (15b, 61) comprises applying a radially compressive force to at least one of the first and second lips (15a, 60, 15b, 61).

## Patentansprüche

1. Eine Druckguss-Batterieklemme (10, 30, 50), die Folgendes umfasst:
eine Verbindungsnase (11, 56);
eine Basis (12, 55), die Folgendes umfasst:
einen gegabelten Säurering (15, 16, 17, 18, 31, 32, 35, 51, 52, 53);
eine Mittelachse, die sich durch die Basis (12, 55) erstreckt;
wobei der gegabelte Säurering (15, 16, 17, 18, 31, 32, 35, 51, 52, 53) eine erste Lippe (15a, 60) und eine zweite Lippe (15b, 61) hat, wobei die erste Lippe (15a, 60) und die zweite Lippe (15b, 61) jeweils eine seitliche Fläche (60a, 61a) haben, die sich von der Basis (12, 55) zu einer abgeschrägten Seitenoberfläche (60d, 61d) erstreckt, die sich zur Basis (12, 55) hin erstreckt, wobei die seitliche Fläche (60a, 61a) einen allgemein planaren Abschnitt hat und die abgeschrägte Seitenoberfläche (60d) der ersten Lippe (15a, 60) sich der abgeschrägten Seitenoberfläche (61d) der zweiten Lippe (15b, 61) nähert, um eine Rille (15e) dazwischen zu bilden;
wobei die Basis **dadurch gekennzeichnet ist, dass** sie eine Vielzahl der gegabelten Säureringe (15, 16, 17, 18, 31, 32, 35, 51, 52, 53) umfasst, wobei jeder der gegabelten Säureringe (15, 16, 17, 18, 31, 32, 35, 51, 52, 53) einen Abdichtungswulst (60b, 61b) an der Seitenfläche (60a, 61a) jeder der Lippen (15a, 60, 15b, 61) umfasst.

2. Die Druckguss-Batterieklemme (10, 30, 50) gemäß Anspruch 1, worin die abgeschrägte Seitenoberfläche (60d) der ersten Lippe (15a, 60) und die abgeschrägte Seitenoberfläche (61d) der zweiten Lippe (15b, 61) eine V-förmige Rille dazwischen bilden.

3. Die Druckguss-Batterieklemme (10, 30, 50) gemäß Anspruch 1, worin die erste Lippe (15a, 60) und die zweite Lippe (15b, 61) ringförmige Lippen umfassen, die sich um die Peripherie der Säureringe (15, 16, 17, 18, 31, 32, 35, 51, 52, 53) herum erstrecken.

4. Die Druckguss-Batterieklemme (10, 30, 50) gemäß Anspruch 1, worin mindestens einer der Säureringe (15, 16, 17, 18, 31, 32, 35, 51, 52, 53) eine Unterschneidung (18a) darin einschließt, zur Bereitstellung eines Vorsprungs zum Eingriff in einen Behälter.

5. Die Druckguss-Batterieklemme (10, 30, 50) gemäß Anspruch 2, worin die abgeschrägte Seitenoberfläche (60d) der ersten Lippe (15a, 60) und die abgeschrägte Seitenoberfläche (61 d) der zweiten Lippe (15b, 61) sich in einem Winkel von ungefähr neunzig Grad zueinander befinden.

6. Die Druckguss-Batterieklemme (10, 30, 50) gemäß Anspruch 1, worin die Seitenfläche (60a, 61a) und die abgeschrägte Seitenoberfläche (60d, 61d) jeder der ersten und der zweiten Lippe (15a, 60, 15b, 61) einen spitzen Winkel zueinander bilden.

7. Die Druckguss-Batterieklemme (10, 30, 50) gemäß Anspruch 1, worin die Seitenfläche (60a, 61a) der ersten Lippe (15a, 60) im Allgemeinen parallel zur Seitenfläche (60a, 61 a) der zweiten Lippe (15b, 61) ist.

8. Die Druckguss-Batterieklemme (10, 30, 50) gemäß Anspruch 1, worin der Abdichtungswulst (60b, 61b) jeder der Seitenflächen (60a, 61a) sich um den Umfang des Basisabschnitts (12, 55) erstreckt.

9. Die Druckguss-Batterieklemme (10, 30, 50) gemäß Anspruch 1, worin der Abdichtungswulst (60b, 61b) jeder der Seitenflächen (60a, 61a) einen Umfangs-Abdichtungswulst (60b, 61b) umfasst, der sich um einen äußeren Abschnitt der Seitenfläche (60a, 61a) herum angrenzend an die entsprechende abgeschrägte Seitenoberfläche (60d, 61d) erstreckt.

10. Die Druckguss-Batterieklemme (10, 30, 50) gemäß Anspruch 1, worin die erste Lippe (15a, 60) von der zweiten Lippe (15b, 61) weg aufgeweitet verläuft.

11. Ein Verfahren zum Formen eines Batterieteils (10, 30, 50), wobei das Verfahren Folgendes umfasst:
Gießen eines Batterieteils (10, 30, 50) mit einem Nasenabschnitt (11, 56), der sich von einem Basisabschnitt (12, 55) erstreckt, worin das Gießen des Batterieteils (10, 30, 50) Folgendes umfasst:
Gießen des Basisabschnitts (12, 55), der eine Vielzahl gegabelter Säureringe (15, 16, 17, 18, 31, 32, 35, 51, 52, 53) hat, wobei einzelne Säureringe (15, 16, 17, 18, 31, 32, 35, 51, 52, 53) eine erste Lippe (15a, 60) und eine zweite Lippe (15b, 61) haben und jede der ersten und der zweiten Lippe (15a, 60, 15b, 61) Folgendes hat:
eine Seitenoberfläche (60a, 61a), die sich vom Basisabschnitt (12, 55) fort erstreckt;
eine abgeschrägte Seitenoberfläche (60d, 61d), die sich von der Seitenoberfläche (60a, 61a) zum Basisabschnitt (12, 55) hin erstreckt, wobei die abgeschrägte Seitenoberfläche (60d) der ersten Lippe (15a, 60) sich der abgeschrägten Seitenoberfläche (61d) der zweiten Lippe (15b, 61) nähert, um eine Rille dazwischen zu bilden.

12. Das Verfahren gemäß Anspruch 11, das weiter das zumindest partielle Aufweiten der ersten Lippe (15a, 60) fort von der zweiten Lippe (15b, 61) umfasst.

13. Das Verfahren gemäß Anspruch 12, worin das zumindest partielle Aufweiten der ersten Lippe (15a, 60) fort von der zweiten Lippe (15b, 61) das Formen eines Abdichtungswulsts (60b, 61b) an der Seitenoberfläche (60a, 61a) jeder der ersten und der zweiten Lippe (15a, 60, 15b, 61) umfasst.

14. Das Verfahren gemäß Anspruch 12, worin das zumindest partielle Aufweiten der ersten Lippe (15a, 60) fort von der zweiten Lippe (15b, 61) das Auftreffen einer Vielzahl von Partikeln auf die abgeschrägte Seitenoberfläche jeder der ersten und der zweiten Lippe (15a, 60, 15b, 61) umfasst.

15. Das Verfahren gemäß Anspruch 12, worin das zumindest partielle Aufweiten der ersten Lippe (15a, 60) fort von der zweiten Lippe (15b, 61) die Ausübung einer radialen Kompressionskraft auf die erste und/oder die zweite Lippe (15a, 60, 15b, 61) umfasst.

## Revendications

1. Borne de batterie (10, 30, 50) moulée sous pression, comprenant:
une patte de connexion (11, 56) ;
une base (12, 55) comprenant :
un anneau acide (15, 16, 17, 18, 31, 32, 35, 51, 52, 53) fourchu ;
un axe central s'étendant à travers ladite base (12, 55) ;
ledit anneau acide (15, 16, 17, 18, 31, 32, 35, 51, 52, 53) fourchu comprenant une première lèvre (15a, 60) et une deuxième lèvre (15b, 61), ladite première lèvre (15a, 60) et ladite deuxième lèvre (15b, 61) comprenant chacune :
une face latérale (60a, 61a) s'étendant de la base (12, 55) à une surface latérale (60d, 61d) conique s'étendant vers la base (12, 55), la face latérale (60a, 61a) ayant une partie globalement plane, et la surface latérale (60d) conique de la première lèvre (15a, 60) convergeant vers la surface latérale (61d) conique de la deuxième lèvre (15b, 61) pour former une gorge (15e) entre elles ;
ladite base étant **caractérisée en ce qu'**elle comprend une pluralité desdits anneaux acides (15, 16, 17, 18, 31, 32, 35, 51, 52, 53) fourchus comprenant un renflement d'étanchéité (60b, 61b) sur la face latérale (60a, 61 a) de chacune desdites lèvres (15a, 60, 15b, 61).

2. Borne de batterie (10, 30, 50) moulée sous pression selon la revendication 1, dans laquelle la surface latérale (60d) conique de la première lèvre (15a, 60) et la surface latérale (61d) conique de la deuxième lèvre (15b, 61) forment entre elles une gorge en forme de V.

3. Borne de batterie (10, 30, 50) moulée sous pression selon la revendication 1, dans laquelle la première lèvre (15a, 60) et la deuxième lèvre (15b, 61) comprennent des lèvres annulaires s'étendant autour de la périphérie des anneaux acides (15, 16, 17, 18, 31, 32, 35, 51, 52, 53).

4. Borne de batterie (10, 30, 50) moulée sous pression selon la revendication 1, dans laquelle au moins un des anneaux acides (15, 16, 17, 18, 31, 32, 35, 51, 52, 53) présente en son sein une contre-dépouille (18a), pour fournir une saillie devant venir en prise avec un récipient.

5. Borne de batterie (10, 30, 50) moulée sous pression selon la revendication 2, dans laquelle la surface latérale (60d) conique de la première lèvre (15a, 60) et la surface latérale (61d) conique de la deuxième lèvre (15b, 61) sont situées à à peu près quatre-vingt dix degrés d'angle l'une par rapport à l'autre.

6. Borne de batterie (10, 30, 50) moulée sous pression selon la revendication 1, dans laquelle la face latérale (60a, 61a) et la surface latérale (60d, 61d) conique de chacune des première et deuxième lèvres (15a, 60, 15b, 61) forment un angle aigu par rapport à chaque autre.

7. Borne de batterie (10, 30, 50) moulée sous pression selon la revendication 1, dans laquelle la face latérale (60a, 61a) de la première lèvre (15a, 60) est globalement parallèle à la face latérale (60a, 61 a) de la deuxième lèvre (15b, 61).

8. Borne de batterie (10, 30, 50) moulée sous pression selon la revendication 1, dans laquelle le renflement d'étanchéité (60b, 61b) de chacune des faces latérales (60a, 61 a) s'étend circonférentiellement autour de la partie de base (12, 55).

9. Borne de batterie (10, 30, 50) moulée sous pression selon la revendication 1, dans laquelle le renflement d'étanchéité (60b, 61b) de chacune des faces latérales (60a, 61a) comprend un renflement d'étanchéité circonférentiel (60b, 61b), s'étendant autour d'une partie extérieure de la face latérale (60a, 61a) adjacente à la surface latérale (60d, 61d) conique correspondante.

10. Borne de batterie (10, 30, 50) moulée sous pression selon la revendication 1, dans laquelle la première lèvre (15a, 60) est écarté, par évasement, de la deuxième lèvre (15b, 61).

11. Procédé de formage d'une pièce de batterie (10,30, 50), le procédé comprenant :
le moulage d'une pièce de batterie (10, 30, 50), comprenant une partie formant patte (11, 56) s'étendant à partir d'une partie formant base (12, 55), dans lequel le moulage de la pièce de batterie (10,30, 50) comprend :
le moulage de la partie formant base (12, 55) ayant une pluralité d'anneaux acides (15, 16, 17, 18, 31, 32, 35, 51, 52, 53) fourchus, des anneaux acides (15, 16, 17, 18, 31, 32, 35, 51, 52, 53) individuels comprenant une première lèvre (15a, 60) et une deuxième lèvre (15b, 61), chacune des première et deuxième lèvres (15a, 60, 15b, 61) comprenant :
une surface latérale (60a, 61a) s'étendant à l'écart de la partie formant base (12, 55) ;
une surface latérale (60d, 61d) conique, s'étendant de la face latérale (60a, 61a) vers la base (12, 55), dans lequel la surface latérale (60d) conique de la première lèvre (15a, 60) converge vers la surface latérale (61d) conique de la deuxième lèvre (15b, 61) pour former une gorge (15e) entre elles.

12. Procédé selon la revendication 11, comprenant en outre l'évasement au moins partiel de la première lèvre (15a, 60) à l'écart de la deuxième lèvre (15b, 61).

13. Procédé selon la revendication 12, dans lequel l'évasement au moins partiel de la première lèvre (15a, 60), à l'écart de la deuxième lèvre (15b, 61), comprend la formation d'un renflement d'étanchéité (60b, 61b) sur la surface latérale (60a, 61a) de chacune des première et deuxième lèvres (15a, 60, 15b, 61).

14. Procédé selon la revendication 12, dans lequel l'évasement au moins partiel de la première lèvre (15a, 60), à l'écart de la deuxième lèvre (15b, 61), comprend la frappe de la surface latérale conique de chacune des première et deuxième lèvres (15a, 60, 15b, 61) avec une pluralité de particules.

15. Procédé selon la revendication 12, dans lequel l'évasement au moins partiel de la première lèvre (15a, 60), à l'écart de la deuxième lèvre (15b, 61), comprend l'application d'une force de compression radiale à au moins l'une des première et deuxième lèvres (15a, 60, 15b, 61).
